# FASCICULE DE BREVET EUROPEEN

(11) **EP 4 226 034 B1**
(45) Date de publication et mention de la délivrance du brevet: **28.08.2024**
(21) Numéro de dépôt: 21801588.1
(22) Date de dépôt: 04.10.2021
(51) Int. Cl.: F02K 1/04, F01D 25/30, F02K 1/80, F02K 1/82

(54) **ENSEMBLE D'ÉTANCHÉITÉ POUR UN CÔNE D'ÉJECTION DE TURBINE**
DICHTUNGSANORDNUNG FÜR EINEN TURBINENAUSSTOSSKEGEL
SEALING ASSEMBLY FOR A TURBINE EJECTION CONE

(30) Priorité: 07.10.2020 FR 2010228
(43) Date de publication de la demande: 16.08.2023
(73) Titulaire: Safran Ceramics, 33185 Le Haillan (FR)
(72) Inventeur: TESSON, Thierry, Guy, Xavier, 77550 MOISSY-CRAMAYEL (FR); THOREL, Christophe Jean François, 77550 MOISSY-CRAMAYEL (FR); AUPETIT, Christophe, Paul, 77550 MOISSY-CRAMAYEL (FR); LE DOCTE, Thierry Jacques Albert, 77550 MOISSY-CRAMAYEL (FR); AVENEL, Philippe, 77550 MOISSY-CRAMAYEL (FR)
(74) Mandataire: Ernest Gutmann - Yves Plasseraud S.A.S.
(86) Numéro de dépôt international: PCT/FR2021/051717
(87) Numéro de publication internationale: WO 2022/074323

(56) Documents cités:
- EP-A1- 3 173 589
- EP-A2- 2 034 136
- EP-B1- 2 034 136
- EP-B1- 3 173 589
- FR-A1- 2 654 776
- FR-A1- 3 084 916

## Description

### Domaine technique de l'invention

Le présent exposé concerne un ensemble pour turbine de turbomachine, telle par exemple qu'un turboréacteur ou turbopropulseur d'avion.

### Etat de la technique antérieure

Une turbomachine de type turboréacteur à double flux comporte classiquement, de l'amont vers l'aval dans le sens de circulation des gaz au sein de la turbomachine, une soufflante, un compresseur basse pression, un compresseur haute pression, une chambre de combustion, une turbine haute pression, une turbine basse pression et une tuyère d'échappement.

Le flux d'air entrant dans la turbomachine est divisé, en aval de la soufflante, en un flux primaire entrant dans une veine dite primaire, et en un flux secondaire, entrant dans une veine dite secondaire. Les compresseurs basse et haute pression, la chambre de combustion, et les turbines haute et basse pression, sont situés au niveau de la veine primaire.

La turbine haute pression est reliée au compresseur haute pression par l'intermédiaire d'un arbre haute pression. La turbine basse pression est reliée au compresseur basse pression et à la soufflante par l'intermédiaire d'un arbre basse pression et éventuellement d'un réducteur de vitesses.

La tuyère d'échappement, ou tuyère d'éjection, d'un turboréacteur comporte classiquement un ensemble permettant d'optimiser l'écoulement des gaz chauds issus de la turbine. Cet ensemble peut également avoir pour fonction d'absorber au moins une partie du bruit engendré par l'interaction de ces gaz chauds avec l'air ambiant et avec le flux d'air froid issu de la soufflante.

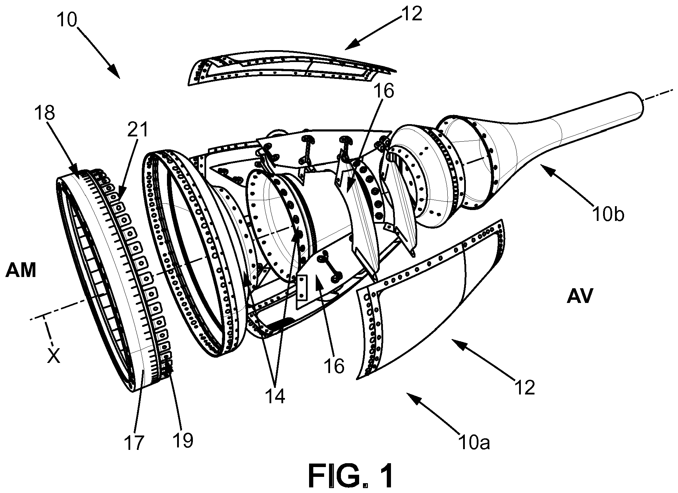

Une partie d'un tel ensemble, conformément à l'art antérieur, est illustrée à la figure 1.

Celui-ci s'étend selon un axe X. Les termes axial, radial et circonférentiel sont définis par référence à l'axe X. Par ailleurs, les termes amont et aval sont définis par rapport au sens de circulation des gaz au sein de la turbomachine.

Cet ensemble comporte un cône d'éjection 10 comprenant une partie amont 10a, de forme sensiblement cylindrique, et une partie aval 10b de forme conique. La partie amont 10a est formée par une paroi annulaire radialement externe 12 comprenant une pluralité de secteurs angulaires reliés entre eux. La surface radialement externe de la paroi annulaire externe 12 et de la partie aval conique 10b délimitent une partie d'une veine aérodynamique pour la circulation des gaz chauds.

La partie amont 10a comprend un caisson acoustique situé radialement à l'intérieur par rapport à la paroi annulaire externe 12. Le caisson acoustique est prévu pour réduire les nuisances sonores des gaz d'échappement et comprend une paroi annulaire interne 14 et une pluralité de cloisons acoustiques 16 agencés radialement entre la paroi annulaire interne 14 et la paroi annulaire externe 12.

L'ensemble comporte en outre un carter d'échappement. L'extrémité amont du cône d'éjection 10 est reliée au carter d'échappement. En particulier, la paroi annulaire interne 102 et la paroi annulaire externe 12 du cône d'éjection 10 sont reliées au carter d'échappement par une bride de liaison 18.

La bride de liaison 18 comporte une partie annulaire amont 17 et des pattes de fixation 19 s'étendant axialement vers l'aval depuis la partie annulaire amont 17. Les pattes de fixation 19 sont régulièrement réparties sur la circonférence et sont écartées circonférentiellement les unes des autres. La bride de liaison 18 est reliée au carter d'échappement et les pattes de fixation 19 sont fixées à la paroi annulaire interne 14 du cône d'éjection 10.

En fonctionnement, des gaz chauds issus de la veine primaire peuvent pénétrer dans le volume interne de la partie aval 10b du cône d'éjection 10, au travers des espaces circonférentiels 21 entre les pattes de fixation 19. Ceci engendre un risque de détérioration de cette partie aval 10b ainsi qu'une réduction des performances de la turbomachine.

Des ensembles pour turbine selon l'art antérieur sont connus de EP 2 034 136 A2 et de EP 3 173 589 A1.

L'invention vise à remédier à ces inconvénients, de façon simple, fiable et peu onéreuse.

### Résumé de l'invention

A cet effet, selon la revendication 1, l'invention concerne un ensemble pour turbine de turbomachine s'étendant selon un axe comprenant :
- un cône d'éjection comprenant une paroi annulaire radialement externe délimitant une veine d'écoulement de gaz chauds et un caisson acoustique agencé radialement à l'intérieur de ladite paroi annulaire externe, le caisson acoustique comprenant une paroi annulaire radialement interne,
- un organe de liaison destiné à être intercalé axialement entre le carter d'échappement et le cône d'éjection, l'organe de liaison comprenant une bride annulaire amont destinée à être fixée au carter d'échappement et une pluralité de pattes de fixation aval reliées à la paroi annulaire interne,
caractérisé en ce qu'il comporte une virole annulaire d'étanchéité comprenant une partie amont entourant les pattes de fixation de l'organe de liaison de façon à recouvrir les espaces situés circonférentiellement entre les pattes et axialement entre la bride annulaire amont de l'organe de liaison et la paroi radialement interne.

Ainsi, la virole annulaire permet de couvrir les espaces par lesquels le flux des gaz chauds peut s'infiltrer. Ceci réduit les infiltrations du flux des gaz chauds dans le cône d'éjection. Les performances de la turbomachine sont ainsi améliorées.

Dans le présent exposé, l'amont et l'aval sont définis par rapport au sens de circulation des gaz. Les termes axial, radial et circonférentiel sont définis par rapport à l'axe dudit ensemble, qui est confondu avec l'axe de la turbomachine. La paroi annulaire interne est aussi appelée la paroi radialement interne.

La virole d'étanchéité peut être métallique. La virole d'étanchéité peut être formée à partir d'une ou de plusieurs tôles. La virole d'étanchéité peut être formée par une pluralité de secteurs angulaires reliés entre eux.

La virole d'étanchéité peut présenter une épaisseur radiale comprise entre 0,3 mm et 1 mm. Selon l'invention, un joint annulaire aval est monté au niveau de l'extrémité aval de la virole d'étanchéité et est situé radialement en regard de la paroi radialement interne.

Le joint annulaire aval permet ainsi de remplir tout interstice situé axialement entre la paroi interne et la virole d'étanchéité, en particulier en fonctionnement, de façon à limiter l'influence des effets de dilatation thermique différenciée en fonctionnement.

Le joint annulaire aval peut être formé par un élément annulaire tressé. L'élément tressé peut être réalisé en matériau textile, par exemple en alumino-silicate.

L'extrémité aval de la virole d'étanchéité peut comporter une gorge débouchant vers l'aval, le joint annulaire aval étant monté dans ladite gorge. La gorge permet de maintenir en position le joint annulaire aval.

Ladite gorge peut présenter une section en C selon une coupe longitudinale, selon un plan transversal par rapport à l'axe dudit ensemble.

La gorge peut être située du côté d'une surface radialement externe d'une partie principale annulaire de la virole d'étanchéité.

La gorge peut être formée, d'une part, par l'extrémité aval de la partie principale annulaire de la virole et par un organe distinct fixé à ladite extrémité aval de la partie principale annulaire, par exemple par soudage. Bien entendu, cet organe rapporté peut être monobloc avec la partie principale annulaire.

La virole d'étanchéité peut être fixée à la bride annulaire amont de l'organe de liaison.

Une telle fixation peut être assurée par l'intermédiaire de vis, de rivets ou de tout autre moyen de fixation approprié.

Selon l'invention, un joint annulaire amont est monté au niveau de l'extrémité amont de la virole d'étanchéité et est situé axialement en regard de la paroi annulaire externe du cône d'éjection.

Le joint annulaire amont peut être formé par un élément annulaire tressé. L'élément tressé peut être réalisé en textile par exemple en alumino-silicate.

Le joint annulaire amont permet ainsi de remplir tout interstice annulaire situé radialement entre la paroi annulaire externe et la virole d'étanchéité.

L'extrémité amont de la virole d'étanchéité peut comporter une gorge débouchant radialement vers l'extérieur, le joint annulaire amont étant monté dans ladite gorge. La gorge permet de maintenir en position le joint annulaire amont.

Ladite gorge peut présenter une section en C selon une coupe longitudinale, selon un plan transversal par rapport à l'axe dudit ensemble.

La gorge peut être située du côté d'une surface radialement externe d'une partie principale annulaire de la virole d'étanchéité.

La gorge peut être formée, au moins en partie, par un organe distinct fixé à ladite extrémité amont de la partie principale annulaire, par exemple par soudage. Bien entendu, cet organe rapporté peut être monobloc avec la partie principale annulaire.

Des moyens d'amortissement peuvent être montés radialement entre l'extrémité amont de la virole d'étanchéité et la paroi annulaire externe.

Le joint annulaire amont peut former lesdits moyens d'amortissement.

Les moyens d'amortissement peuvent être formés par des pattes élastiquement déformables s'étendant radialement depuis la virole d'étanchéité, la paroi annulaire externe étant apte à venir en appui sur des extrémités libres des pattes.

Les moyens d'amortissement peuvent être formés par des pattes élastiquement déformables s'étendant radialement depuis la paroi annulaire externe, la virole d'étanchéité étant apte à venir en appui sur des extrémités libres des pattes.

Les pattes peuvent s'étendre axialement vers l'amont ou vers l'aval. Les pattes peuvent s'étendre circonférentiellement autour de l'axe de l'ensemble. Les pattes peuvent se déformer dans la direction radiale.

Les pattes peuvent être régulièrement réparties sur la circonférence de la virole d'étanchéité. Les pattes peuvent être formées par des pièces distinctes du reste la virole d'étanchéité. Dans ce cas, les pattes peuvent être fixées par boulonnage, rivetage ou brasage à la virole d'étanchéité.

Les pattes peuvent être réalisées d'un seul tenant avec le reste de la virole d'étanchéité.

Les pattes peuvent être formés par découpage et pliage d'une tôle formant, au moins en partie, la virole d'étanchéité.

Les pattes de fixation de l'organe de liaison peuvent être rigides ou flexibles. Les pattes de fixation flexibles permettent de compenser la dilatation thermique entre le cône d'éjection et le carter d'échappement.

Le caisson acoustique peut comprendre une pluralité de cloisons acoustiques s'étendant radialement vers l'extérieur depuis la paroi annulaire interne du caisson acoustique. Les cloisons acoustiques peuvent être métalliques.

La paroi annulaire interne ou la paroi annulaire externe peuvent être en matériau composite ou métallique.

Le cône d'éjection peut comprendre une partie aval, reliée à la paroi annulaire externe, réalisée dans un matériau composite à matrice céramique. La partie aval peut être conique.

Le carter d'échappement peut être réalisé dans un matériau métallique.

La paroi annulaire externe peut former une continuité de surface avec une partie du carter d'échappement de sorte à définir une veine d'écoulement du flux des gaz chauds.

Une partie aval de la paroi annulaire interne peut être fixée à une partie aval de la paroi annulaire externe.

Le présent exposé concerne également une turbine comprenant un ensemble tel que précité.

### Brève description des figures

[Fig. 1] est une vue éclatée, en perspective, d'un cône d'éjection de l'art antérieur,
[Fig. 2] est une vue en coupe d'une partie d'un ensemble selon une première forme de réalisation, dans laquelle le joint annulaire aval est illustré en coupe,
[Fig. 3] est une vue correspondant à la figure 2, dans laquelle le joint annulaire aval est représenté sous sa forme annulaire,
[Fig. 4] est une vue en coupe d'une partie d'un ensemble selon une deuxième forme de réalisation,
[Fig. 5] est une vue en coupe d'une partie d'un ensemble selon une troisième forme de réalisation,
[Fig. 6] est une vue en perspective d'une virole d'étanchéité de l'ensemble de la figure 5.

### Description détaillée de l'invention

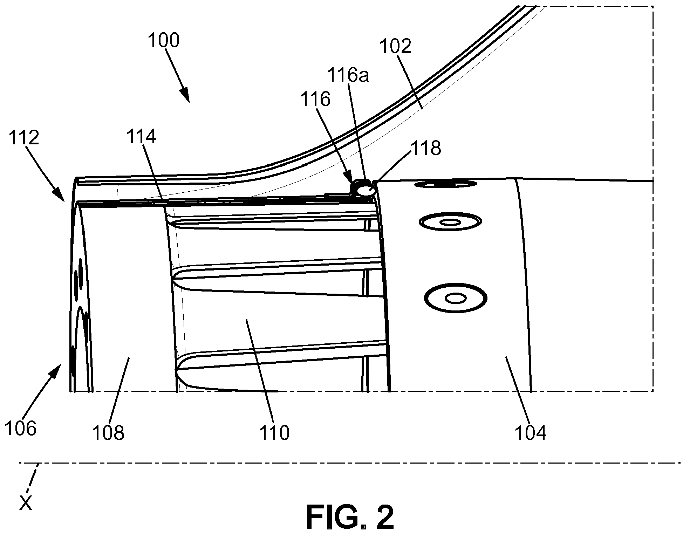

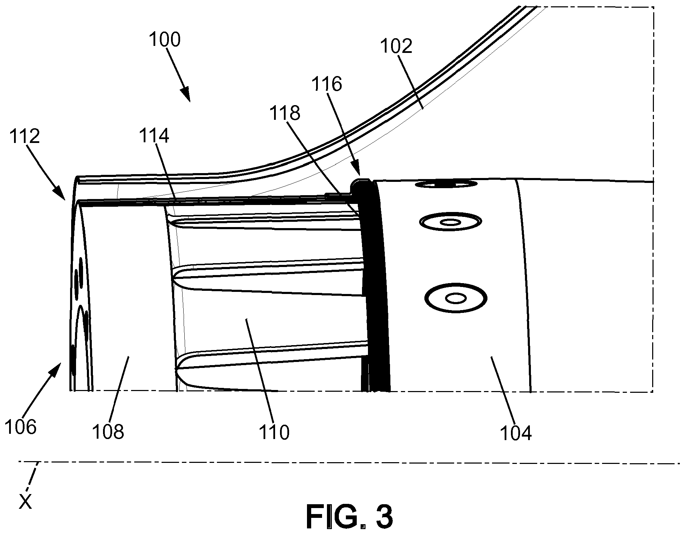

Les figures 2 et 3 représentent une partie d'un ensemble d'axe X pour turbomachine selon une première forme de réalisation de l'invention. Cet ensemble comporte un cône d'éjection 100 comprenant, du côté amont, une paroi annulaire externe 102 délimitant une veine d'écoulement d'un flux de gaz chauds et un caisson acoustique agencé radialement à l'intérieur de la paroi annulaire externe 102. Le caisson acoustique comprend une paroi annulaire interne 104 agencée radialement à l'intérieur de la paroi annulaire externe 102 et une pluralité de cloisons acoustiques agencées entre la paroi annulaire externe 102 et la paroi annulaire interne 104.

L'ensemble comporte en outre un carter d'échappement non représenté. La paroi annulaire interne 104 du cône d'éjection 100 est reliée audit carter d'échappement, par l'intermédiaire d'une bride de liaison 106.

La bride de liaison 106 comporte une partie annulaire amont 108 et des pattes de fixation 110 s'étendant axialement vers l'aval depuis la partie annulaire amont 108. Les pattes de fixation 110 sont régulièrement réparties sur la circonférence et sont écartées circonférentiellement les unes des autres. La bride de liaison 106 est reliée au carter d'échappement et les pattes de fixation 110 sont fixées à la paroi annulaire interne 104 du cône d'éjection 100, par exemple par boulonnage.

Les pattes de fixation 110 peuvent être flexibles ou rigides.

L'ensemble comprend en outre une virole d'étanchéité 112 annulaire agencée autour de la bride de liaison 106 de sorte à couvrir les espaces circonférentiels entre les pattes de fixation 110 et l'espace axial entre la partie annulaire 108 et la paroi annulaire interne 104.

La virole d'étanchéité 112 permet ainsi d'éviter l'introduction de gaz chauds à l'intérieur de la paroi annulaire interne 104, au travers des jeux ou des ouvertures situées circonférentiellement entre les pattes 110.

La virole d'étanchéité 112 peut être métallique.

L'extrémité amont de la virole d'étanchéité 112 peut être fixée à la partie annulaire 108 de la bride de liaison 106.

La virole d'étanchéité 112 comprend une partie annulaire 114 par exemple cylindrique. La partie annulaire 114 présente une forme interne épousant la forme externe de la partie annulaire 108 de la bride de liaison 106.

L'extrémité aval de la virole d'étanchéité 112 présente en outre une gorge aval 116 débouchant axialement vers l'aval.

La gorge 116 présente une section en C selon une coupe longitudinale, selon un plan transversal par rapport à X.

La gorge 116 peut être située du côté d'une surface radialement externe de la partie annulaire 114.

La gorge 116 peut être formée, d'une part, par l'extrémité aval de la partie annulaire 114 de la virole et par un organe distinct 116a fixé à ladite extrémité aval de la partie annulaire 114, par exemple par soudage. Bien entendu, cet organe rapporté 116a peut être monobloc avec la partie principale 112a.Selon un mode de réalisation, un joint annulaire aval 118 peut être agencé dans la gorge aval 116. Le joint annulaire aval 118 est situé entre l'extrémité aval de la virole d'étanchéité 112 et l'extrémité amont de la paroi radialement interne 104.

Le joint annulaire aval 118 est formé par un élément annulaire tressé réalisé en matériau textile, par exemple en alumino-silicate.

Le joint annulaire aval permet ainsi de remplir tout interstice annulaire situé axialement entre la paroi annulaire interne 104 et la virole d'étanchéité 112.

La paroi annulaire interne 104 et la paroi annulaire externe 102 sont par exemple métalliques ou en matériau composite à matrice céramique (C.M.C.).

Le cône d'éjection 100 comprend une partie aval conique reliée à la paroi annulaire externe 102. La partie aval conique est réalisée dans un matériau en composites à matrice céramique. La paroi annulaire externe 102 peut former une continuité de surface avec une partie du carter d'échappement, de sorte à définir la veine d'écoulement du flux des gaz chauds.

Une partie aval de la paroi annulaire interne 104 peut être fixée à une partie aval de la paroi annulaire externe 102.

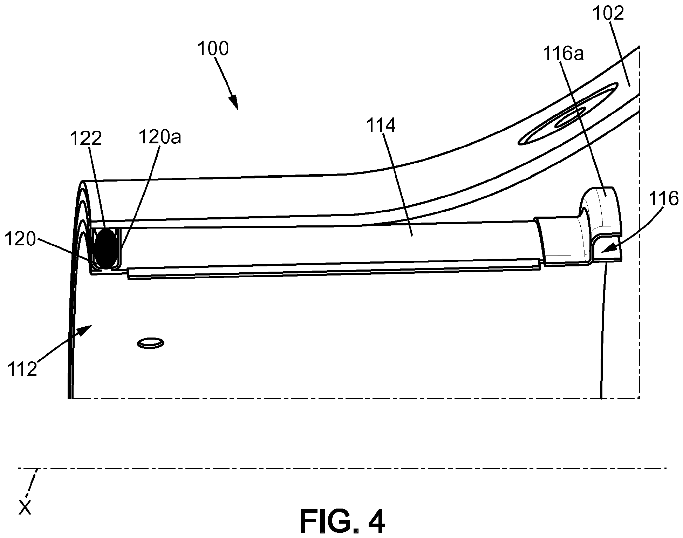

La figure 4 illustre un ensemble selon une autre forme de réalisation, qui diffère de celle décrite en référence aux figures 2 et 3 en ce que la virole d'étanchéité 112 comprend en outre une gorge amont 120 débouchant radialement vers l'extérieur et dans laquelle est logé un joint annulaire amont 122.

La gorge 120 présente une section en C selon une coupe longitudinale, selon un plan transversal par rapport à X.

La gorge peut être située du côté de la surface radialement externe de la virole 112.

La gorge peut être formée par un organe distinct 120a fixé à l'extrémité amont de la partie annulaire 114 de la virole 112, par exemple par soudage. Bien entendu, cet organe rapporté 120a peut être monobloc avec la partie annulaire 114.

Le joint annulaire amont 122 est situé radialement entre l'extrémité amont de la virole d'étanchéité 112 et la paroi annulaire externe 102 du cône d'éjection 100.

Le joint annulaire amont 122 est formé par un élément annulaire tressé en textile, par exemple en alumino-silicate.

Le joint annulaire amont 122 permet ainsi de remplir tout interstice annulaire situé radialement entre la paroi annulaire externe 102 et la virole d'étanchéité 112.

Le joint annulaire amont 122 peut être apte à se déformer radialement de sorte à amortir les déplacements radiaux de la paroi annulaire externe 102.

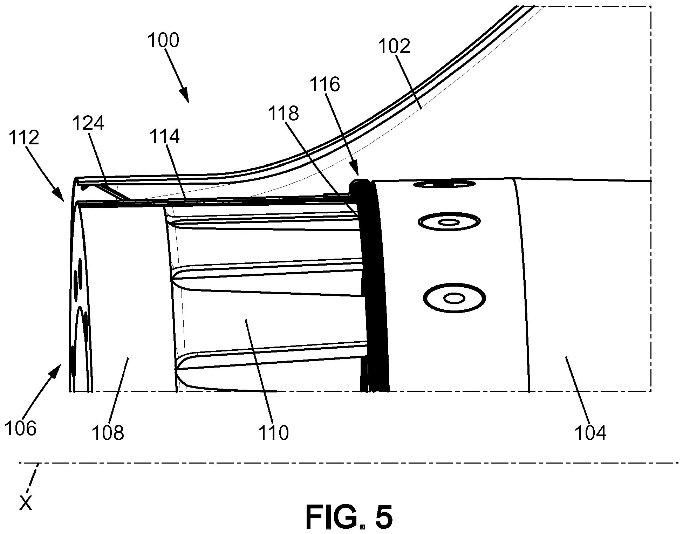

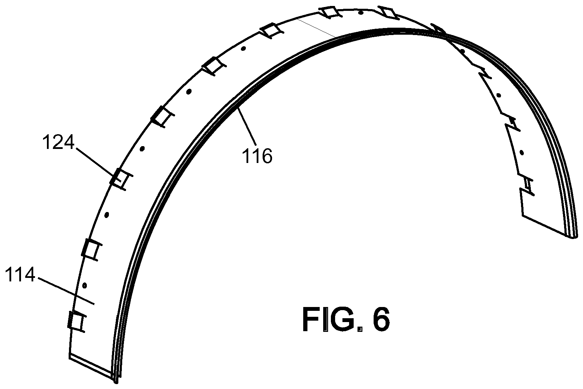

Les figures 5 et 6 illustrent une autre forme de réalisation, qui diffère de celle décrite en référence aux figures 2 et 3 en ce que des pattes 124 élastiquement déformables s'étendent radialement vers l'extérieur et axialement vers l'amont depuis la partie amont de la partie annulaire 114 de la virole d'étanchéité 112. Les pattes 124 sont régulièrement réparties sur la circonférence et sont écartées circonférentiellement les unes des autres.

Les pattes 124 sont réalisées d'un seul tenant avec la partie annulaire 114 de la virole d'étanchéité 112, par exemple par découpage et pliage de l'extrémité amont de la partie annulaire 114.

La paroi annulaire externe 102 est en appui sur les extrémités libres des pattes 124, qui amortissent les déplacements radiaux de la paroi annulaire externe 102. Ces déplacements radiaux de la paroi annulaire externe 102 sont par exemple induits par les dilatations de la partie amont de la paroi annulaire externe 102 dues aux contraintes thermomécaniques que subit la paroi annulaire externe 102. Les contraintes thermomécaniques sont en parties dues à la différence de matériaux entre la partie aval conique du cône d'éjection, les parois annulaires externe et interne, et le carter d'échappement.

## Revendications

1. Ensemble pour turbine de turbomachine s'étendant selon un axe (X) comprenant :
- un cône d'éjection (100) comprenant une paroi annulaire radialement externe (102) délimitant une veine d'écoulement d'un flux de gaz chauds et un caisson acoustique agencé radialement à l'intérieur de ladite paroi annulaire externe (102), le caisson acoustique comprenant une paroi annulaire radialement interne (104), et
- un organe de liaison (106) destiné à être intercalé axialement entre un carter d'échappement et le cône d'éjection (100), l'organe de liaison (106) comprenant une bride annulaire amont (108) destinée à être fixée au carter d'échappement et une pluralité de pattes de fixation (110) aval reliées à la paroi annulaire interne (104),
**caractérisé en ce qu'**il comporte une virole annulaire d'étanchéité (112) comprenant une partie amont entourant les pattes de fixation (110) de l'organe de liaison (106) de façon à recouvrir les espaces situés circonférentiellement entre les pattes de fixation (110) et axialement entre la bride annulaire amont (108) de l'organe de liaison (106) et la paroi annulaire radialement interne (104), un joint annulaire aval (118) ou respectivement amont (122) étant monté au niveau de l'extrémité aval ou respectivement amont de la virole d'étanchéité (112) et est situé radialement en regard de la paroi radialement interne (104) ou respectivement axialement en regard de la paroi annulaire externe (102) du cône d'éjection (100).

2. Ensemble selon la revendication 1, dans lequel l'extrémité aval de la virole d'étanchéité (112) comporte une gorge (116) débouchant vers l'aval, le joint annulaire aval (118) étant monté dans ladite gorge (116).

3. Ensemble selon la revendication 2, dans lequel la virole d'étanchéité (112) est fixée à la bride annulaire amont (108) de l'organe de liaison (106).

4. Ensemble selon la revendication 1, dans lequel l'extrémité amont de la virole d'étanchéité (112) comporte une gorge (120) débouchant radialement vers l'extérieur, le joint annulaire amont (122) étant monté dans ladite gorge (120).

5. Ensemble selon l'une des revendications 1 à 4, dans lequel des moyens d'amortissement sont montés radialement entre l'extrémité amont de la virole d'étanchéité (112) et la paroi annulaire externe (102).

6. Ensemble selon les revendications 4 et 5, dans lequel le joint annulaire amont (122) forme lesdits moyens d'amortissement.

7. Ensemble selon la revendication 5 en combinaison avec l'une des revendications 1 à 3, dans lequel les moyens d'amortissement sont formés par des pattes (124) élastiquement déformables s'étendant radialement depuis la virole d'étanchéité (112), ou respectivement depuis la paroi annulaire externe (102), la paroi annulaire externe (102) ou respectivement la virole d'étanchéité (112) étant apte à venir en appui sur des extrémités libres des pattes (124).

8. Turbomachine comprenant un ensemble selon l'une des revendications précédentes.

## Patentansprüche

1. Anordnung für eine Turbine einer Turbomaschine bzw. eines Turbotriebwerks, die sich entlang einer Achse (X) erstreckt, enthaltend:
- einen Ausstoßkonus (100) mit einer radial äußeren ringförmigen Wand (102), die einen Strömungskanal für einen Heißgasstrom begrenzt, und einem Schallkasten, der radial im inneren der äußeren ringförmigen Wand (102) angeordnet ist, wobei der Schallkasten eine radial innere ringförmige Wand (104) aufweist, und
- ein Verbindungsglied (106), das dazu bestimmt ist, axial zwischen einem Austrittsgehäuse und dem Ausstoßkonus (100) angeordnet zu werden, wobei das Verbindungsglied (106) einen stromaufwärtigen ringförmigen Flansch (108) zum Befestigen an das Austrittsgehäuse und eine Vielzahl von stromabwärtigen Befestigungslaschen (110) umfasst, die mit der inneren ringförmigen Wand (104) verbunden sind,
**dadurch gekennzeichnet, dass** sie einen Abdichtungsmantelring (112) umfasst, der einen stromaufwärtigen Abschnitt aufweist, der die Befestigungslaschen (110) des Verbindungsglieds (106) so umgibt, dass die Zwischenräume abgedeckt werden, die sich in Umfangsrichtung zwischen den Befestigungslaschen (110) und axial zwischen dem stromaufwärtigen ringförmigen Flansch (108) des Verbindungsglieds (106) und der radial inneren ringförmigen Wand (104) befinden, wobei eine stromabwärtige (118) bzw. stromaufwärtige (122) Ringdichtung am stromabwärtigen bzw. stromaufwärtigen Ende des Abdichtungsmantelrings (112) gelagert ist und radial der radial inneren Wand (104) bzw. axial der äußeren ringförmigen Wand (102) des Ausstoßkonus (100) gegenüberliegt.

2. Anordnung nach Anspruch 1,
wobei das stromabwärtige Ende des Abdichtungsmantelrings (112) eine stromabwärts mündende Nut (116) aufweist, wobei die stromabwärtige Ringdichtung (118) in der Nut (116) gelagert ist.

3. Anordnung nach Anspruch 2,
wobei der Abdichtungsmantelring (112) an den stromaufwärtigen ringförmigen Flansch (108) des Verbindungsglieds (106) befestigt ist.

4. Anordnung nach Anspruch 1,
wobei das stromaufwärtige Ende des Abdichtungsmantelrings (112) eine Nut (120) aufweist, die radial nach außen mündet, wobei die stromaufwärtige Ringdichtung (122) in der Nut (120) gelagert ist.

5. Anordnung nach einem der Ansprüche 1 bis 4,
wobei radial zwischen dem stromaufwärtigen Ende des Abdichtungsmantelrings (112) und der äußeren ringförmigen Wand (102) Dämpfungsmittel angebracht sind.

6. Anordnung nach den Ansprüchen 4 und 5,
wobei die stromaufwärtige Ringdichtung (122) die Dämpfungsmittel bildet.

7. Anordnung nach Anspruch 5 in Kombination mit einem der Ansprüche 1 bis 3,
wobei die Dämpfungsmittel aus elastisch verformbaren Laschen (124) gebildet sind, die sich ausgehend von dem Abdichtungsmantelring (112) bzw. von der äußeren ringförmigen Wand (102) radial erstrecken, wobei die äußere ringförmige Wand (102) bzw. der Abdichtungsmantelring (112) an freien Enden der Laschen (124) zur Anlage gelangen kann.

8. Turbomaschine bzw. Turbotriebwerk mit einer Anordnung nach einem der vorhergehenden Ansprüche.

## Claims

1. An assembly for a turbomachine turbine extending along an axis (X) comprising:
- an ejection cone (100) comprising a radially outer annular wall (102) delimiting a flow duct for a flow of hot gases and an acoustic box arranged radially inside said outer annular wall (102), the acoustic box comprising a radially inner annular wall (104), and
- a connecting member (106) intended to be inserted axially between an exhaust housing and the ejection cone (100), the connecting member (106) comprising an upstream annular flange (108) intended to be attached to the exhaust housing and a plurality of downstream securing tabs (110) connected to the inner annular wall (104), **characterized in that** it includes an annular sealing shroud (112) comprising an upstream portion surrounding the securing tabs (110) of the connecting member (106) so as to cover the spaces located circumferentially between the securing tabs (110) and axially between the upstream annular flange (108) of the connecting member (106) and the radially inner annular wall (104), a downstream (118) or respectively upstream (122) annular seal being mounted at the downstream or respectively upstream end of the sealing shroud (112) and is located radially opposite the radially inner wall (104) or respectively axially opposite to the outer annular wall (102) of the ejection cone (100).

2. The assembly according to claim 1, wherein the downstream end of the sealing shroud (112) includes a groove (116) opening downstream, the downstream annular seal (118) being mounted in said groove (116).

3. The assembly according to claim 2, wherein the sealing shroud (112) is attached to the upstream annular flange (108) of the connecting member (106).

4. The assembly according to claim 1, wherein the upstream end of the sealing shroud (112) includes a groove (120) opening radially outwards, the upstream annular seal (122) being mounted in said groove (120).

5. The assembly according to one of claims 1 to 4, wherein damping means are mounted radially between the upstream end of the sealing shroud (112) and the outer annular wall (102).

6. The assembly according to claims 4 and 5, wherein the upstream annular joint (122) forms said damping means.

7. The assembly according to claim 5 in combination with one of claims 1 to 3, wherein the damping means are formed by elastically deformable tabs (124) extending radially from the sealing shroud (112), or respectively from the outer annular wall (102), the outer annular wall (102) or respectively the sealing shroud (112) being able to bear on the free ends of the tabs (124).

8. A turbomachine comprising an assembly according to one of the preceding claims.
